# EUROPEAN PATENT APPLICATION

(11) **EP 2 787 604 A1**
(43) Date of publication of application: **08.10.2014**
(21) Application number: 12854472.3
(22) Date of filing: 29.11.2012
(51) Int. Cl.: H02J 17/00

(54) **DEVICE AND METHOD FOR CONTACTLESS POWER TRANSFER**

(30) Priority: 29.11.2011 JP 2011260316
(71) Applicant: IHI Corporation, Tokyo 135-8710 (JP)
(72) Inventor: NIIZUMA Motonao, Tokyo 135-8710 (JP)
(74) Representative: Lamb, Martin John Carstairs
(86) International application number: PCT/JP2012/080888
(87) International publication number: WO 2013/081045

(57) **Abstract**

A wireless power transfer device (1) includes a power-supplying circuit (13) that supplies power to be transferred between a power-transmitting coil (L1) and a power receiving coil (L2) with at least one of the relative position and orientation between the coils being changeable, a displacement measuring section (14) that measures the amount of any changes in the relative position and orientation between the coils, a control section (15) that based on the result of measurements taken by the displacement measuring section (14), determines a frequency at which the efficiency of power transfer between the coils is maximized, and controls the power-supplying circuit (13) so that power having the frequency is transferred between the coils. The present invention provides a wireless power transfer device and method which can efficiently transfer power in a wireless manner if the relative position between the coils changes.

## Description

### Technical Field

The present invention relates to a wireless power transfer device and method for transferring power in a wireless manner.

Priority is claimed on Japanese Patent Application No. 2011-260316 filed in Japan on November 29, 2011, the content of which is incorporated herein by reference.

### Background Art

A wireless power transfer device provides various advantages in that it eliminates wires (cables) for power transfer, avoids the need to consider the durability and failure of electrical contacts, and is substantially free from electric leakage due to water and the like. Recently, the wireless power transfer device is used to transfer power not only to charge batteries disposed in consumer equipment such as electronic home appliances and vehicles such as electric vehicles (EV) and hybrid vehicles (HV), but also to drive industrial equipment (for example, a stage device, an arm, a crane, a robot and the like).

Patent Document 1, as listed below, discloses a wireless power transfer device which wirelessly transfers power to a carrier used in semiconductor manufacturing equipment. Specifically, a carriage is movable along a conveyance line. The conveyance line has a stop position in which a power supply unit is disposed. When the carriage is stopped in the stop position, the power supply unit supplies power to the carriage by virtue of electromagnetic induction. Patent Documents 2 through 8 also disclose wireless power transfer devices to wirelessly transfer power to consumer equipment such as a cellular phone and movable bodies such as a vehicle.

### Document of Related Art

### Patent documents

[Patent Document 1]
   Japanese Unexamined Patent Application, First Publication No. Hei 8-51137
[Patent Document 2]
   Japanese Unexamined Patent Application, First Publication No. 2008-236916
[Patent Document 3]
   Japanese Unexamined Patent Application, First Publication No. 2009-225551
[Patent Document 4]
   Japanese Unexamined Patent Application, First Publication No. 2010-130878
[Patent Document 5]
   Japanese Unexamined Patent Application, First Publication No. 2010-141976
[Patent Document 6]
   Japanese Unexamined Patent Application, First Publication No. 2010-141977
[Patent Document 7]
   Japanese Unexamined Patent Application, First Publication No. 2010-158151
[Patent Document 8]
   Japanese Unexamined Patent Application, First Publication No. 2010-183810

### Summary of Invention

### Technical Problem

When the wireless power transfer device is used to charge batteries disposed in the consumer equipment and the vehicle, the consumer equipment and the vehicle to which power is transferred are, in most cases, placed in a predetermined position relative to the wireless power transfer device, and receive power from the wireless power transfer device while the consumer equipment and the vehicle remain stationary. By contrast, when the wireless power transfer device is used to transfer power to drive the industrial equipment, the wireless power transfer device, in some cases, transfers power to a movable body such as a stage device and an arm while the movable body is (for example, linearly or rotationally) moving.

When power is transferred to the movable body, a change in the relative position between a power-transmitting coil of the wireless power transfer device and a power-receiving coil of the movable body occurs as the movable body is moving. Power can be transferred in a highly efficient manner when the movable body is located in a particular position. However, when the movable body is displaced from that particular position, the efficiency of power transfer may be reduced. If the efficiency is reduced, more time is required to charge the batteries. Also, when the movable body needs power, such a reduction in the efficiency of power transfer causes insufficient supply of power to the movable body. If this occurs, the movable body can only operate at a lower speed, or may become unable to operate.

In view of the foregoing, it is an object of the present invention to provide a wireless power transfer device and method which can efficiently transfer power in a wireless manner if a change in the relative position between coils occurs. Solution to Problem

In order to solve the foregoing problems, in a first aspect of the present invention, a wireless power transfer device capable of wirelessly transferring power between a first coil and a second coil with at least one of the relative position and orientation between the first and second coils being changeable, includes a power transfer section that supplies power to be transferred between the first and second coils, a measuring section that measures the amount of any changes in the relative position and orientation between the first coil and the second coil, and a control section that based on the result of measurements taken by the measuring section, determines a frequency at which the efficiency of power transfer between the first coil and the second coil is maximized, and controls the power transfer section so that power having the frequency is transferred between the first coil and the second coil.

Also, in a second aspect of the wireless power transfer device according to the present invention, the control section, as set forth in the first aspect, includes a table used to determine the frequency, with the table showing the relationship between the amount of any changes in the relative position and orientation between the first coil and the second coil and the frequency at which the efficiency of power transfer between the first coil and the second coil is maximized.

Further, in a third aspect of the wireless power transfer device according to the present invention, the table, as set forth in the second aspect, discretely defines relationship between the frequency at which the efficiency of power transfer between the first coil and the second coil is maximized and the amount of any changes in the relative position and orientation between the first coil and the second coil, and the control section interpolates the entries of the table to obtain the frequency.

Also, in a fourth aspect of the wireless power transfer device according to the present invention, the control section, as set forth in the first to third aspects, includes a frequency selection unit operable to obtain the frequency at which the efficiency of power transfer between the first coil and the second coil is maximized, based on the result of measurements taken by the measuring section, an oscillatory circuit operable to output a signal having the frequency selected by the frequency selection unit, and a drive control circuit operable to controllably drive the power transfer section in response to the signal output from the oscillatory circuit.

In a fifth aspect of the wireless power transfer device according to the present invention, the power transfer section, as set forth in the fourth aspect, includes a power conversion circuit that under the control of the drive control circuit, converts DC (direct current) power to AC (alternating current) power having the frequency at which the efficiency of power transfer between the first coil and the second coil is maximized.

Also, in a sixth aspect of the wireless power transfer device according to the present invention, one of the first and second coils, as set forth in the first to fifth aspects, is disposed in a fixed component which is fixed in position and orientation, and the other coil is disposed in a movable component with at least one of its position and orientation being changeable.

A method for wirelessly transferring power between a first coil and a second coil with at least one of the relative position and orientation between the first coil and the second coil being changeable, includes a first step of measuring the amount of changes in the relative position and orientation between the first coil and the second coil, a second step of determining a frequency at which the efficiency of power transfer between the first coil and the second coil is maximized, based on the result of measurements taken in the first step, and a third step of controlling a power transfer section so that power having the frequency determined in the second step is transferred between the first coil and the second coil, with the power transfer section being operable to supply power to be transferred between the first coil and the second coil.

### Effects of Invention

According to the present invention, any change in the relative position and orientation between the first coil and the second coil is first measured. A frequency at which the efficiency of power transfer can be maximized is then determined based on the result of the measurements. The power transfer section is so controlled as to transfer between the first and second coils power having the frequency as determined. Accordingly, power can be efficiently transferred in a wireless manner if a change in at least one of the relative position and orientation between the first and second coils occurs.

### Brief Description of Drawings

Fig. 1 is a schematic view of a wireless power transfer device according to one embodiment of the present invention;
Fig. 2 is a block diagram showing the principal part of the wireless power transfer device according to the embodiment of the present invention; and
Fig. 3 is a view showing one example of an oscillatory frequency table used in the embodiment of the present invention.

### Description of Embodiments

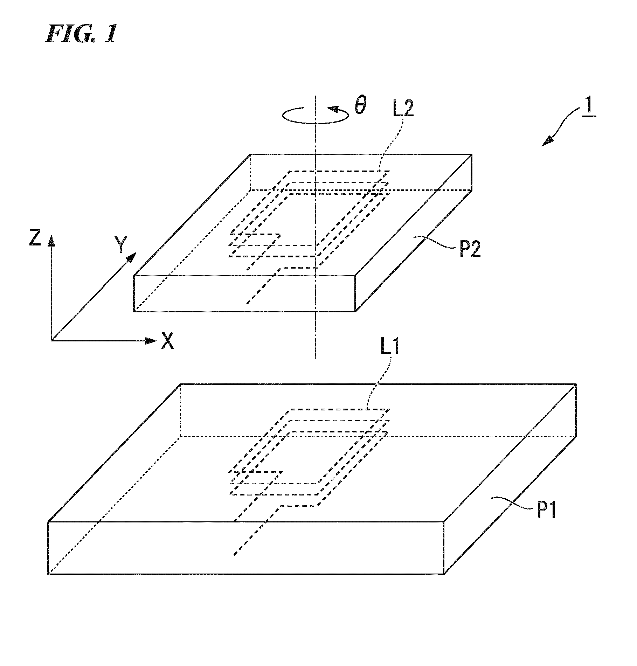

A wireless power transfer device and method according to one embodiment of the present invention will now be described in detail with reference to the drawings. Fig. 1 is a schematic view of a wireless power transfer device according to one embodiment of the present invention. As shown in Fig. 1, a wireless power transfer device 1 in this embodiment includes a power-transmitting coil (first coil) L1 and a power-receiving coil (second coil) L2 and is capable of wirelessly transferring power from the power-transmitting coil L1 to the power-receiving coil L2.

The power-transmitting coil L1 and the power-receiving coil L2 shown in Fig. 1 are rectangular in shape as viewed in plan (as viewed in a Z direction, as will be explained later). These coils are placed in close proximity to each other so as to form an electromagnetic coupling circuit. The electromagnetic coupling circuit is a circuit wherein the power-transmitting coil L1 and the power-receiving coil L2 are electromagnetically coupled to wirelessly transfer power from the power-transmitting coil L1 to the power-receiving coil L2. The electromagnetic coupling circuit may be a circuit where power transfer is carried out using "electromagnetic induction" or "magnetic field resonance".

The power-transmitting coil L1 is disposed in a fixed component P1 which is fixed in position and orientation. The power-receiving coil L2 is disposed in a movable component P2 whose position and orientation is changeable. When a change in the position and orientation of the movable component P2 occurs, such a change results in a change in the relative position and orientation between the power-transmitting coil L1 of the fixed component P1 and the power-receiving coil L2 of the movable component P2. To avoid undue drop in the efficiency of power transfer, the power-transmitting coil L1 of the fixed component P1 is generally positioned in a face to face relation to the power-receiving coil L2 of the movable component P2 within the moving range of the movable component P2. In the description, the term "position" is used to mean the location of the movable component P2 in X, Y and Z directions under the orthogonal coordinate system shown in Fig. 1. Also, the term "orientation" is used to mean rotation about X, Y and Z axes.

For ease of explanation, in this embodiment, the movable component P2 has three degrees of freedom, that is, translational movement in the X-Y plane (two degrees of freedom) and rotation about the Z axis (one degree of freedom). One example of such a device having components like the fixed component P1 and the movable component P2 is a stage device which moves an object placed on the stage device. That is, the stage device acts as the movable component P2 as the stage device is movable with an object placed on the stage device. A stage drive unit causes the stage device to translate in the X-Y plane and rotate about the Z axis. The stage drive unit thus acts as the fixed component P1.

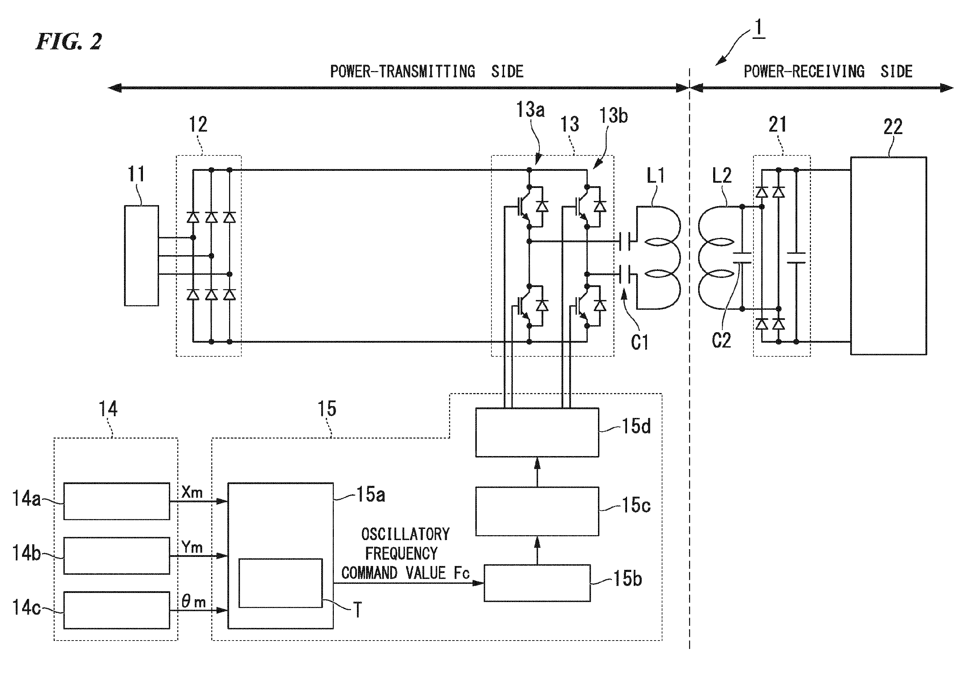

Fig. 2 is a block diagram showing the principal part of the wireless power transfer device according to the embodiment of the present invention. As shown in Fig. 2, the wireless power transfer device 1 is generally divided into two systems, with one of the two systems disposed in the fixed component P1 (power transmitting side) and the other system disposed in the movable component P2 (power receiving side). In addition to the power-transmitting coil L1, the system in the power transmitting side includes an external power source 11, a rectifier circuit 12, a power-supplying circuit (power transfer section) 13, a displacement measuring section (measuring section) 14, a control section 15 and the like. In addition to the power-receiving coil L2, the system in the power receiving side includes a power receiving circuit 21 and the like. A load 22 is disposed in the power receiving side to receive power in a wireless manner. The load 22 is in the form, for example, of a motor to drive the movable component P2.

The external power source 11 is a power source that supplies power required to generate power to be transferred to the movable component P2. The external power source 11 supplies three phase AC power having a voltage, for example, of 200 V. The external power source 11 is not limited to such a three phase AC power source, but may be an AC power source which supplies single phase AC power, as in a commercial power source. The rectifier circuit 12 is a circuit which rectifies the AC power supplied from the external power source 11 and converts the AC power to DC power. As shown in Fig. 2, the rectifier circuit 12 is, for example, a three-phase full-wave rectifier circuit (bridge rectifier circuit).

A DC power source such as a fuel cell and a solar cell may be used as the external power source 11. In such a case, the rectifier circuit 12 may be omitted.

The power-supplying circuit 13 receives power from the rectifier circuit 12 and wirelessly transfers the power to the movable component P2 through the electromagnetic coupling circuit formed by the power-transmitting coil L1 and the power-receiving coil L2 disposed in the movable component P2. Specifically, the power-supplying circuit 13 makes it possible to wirelessly transfer power to the movable component P2 by converting DC power from the rectifier circuit 12 to AC power and then, supplying the AC power to the power-transmitting coil L1 under the control of the control section 15.

That is, the power-supplying circuit 13 is a power conversion circuit that converts the DC power from the rectifier circuit 12 to AC power under the control of the control section 15. As shown, for example, in Fig. 2, the power-supplying circuit 13 is a circuit in which two switching legs (circuit including two transistors connected in series and diodes connected in parallel with the two transistors) 13a, 13b are connected in parallel. The transistors shown in Fig. 2 may, for example, be a power MOSFET (Metal Oxide Semiconductor Field Effect Transistor), an IGBT (Insulated Gate Bipolar Transistor) and other power control semiconductor devices.

Two capacitors C1 are disposed between the power-supplying circuit 13 and the power-transmitting coil L1. The capacitors C1 and the power-transmitting coil L1 collectively form a series resonant circuit. One end of the power-transmitting coil L1 is connected to the switching leg 13a of the power-supplying circuit 13 through one of the capacitors C1. The other end of the power-transmitting coil L1 is connected to the switching leg 13b of the power-supplying circuit 13 through the other capacitor C1.

The displacement measuring section 14 includes three displacement measuring units 14a to 14c to measure the amount of a change in the position and orientation of the movable component P2 relative to the fixed component P1. The displacement measuring unit 14a is used to measure the amount of positional displacement (Xm) of the movable component P2 in the X direction. The displacement measuring unit 14b is used to measure the amount of positional displacement (Ym) of the movable component P2 in the Y direction. The displacement measuring unit 14c is used to measure the amount of angular displacement (θm) of the movable component P2 about the Z axis. The displacement measuring units 14a, 14b may be a magnetostrictive linear position sensor, a magnetic scale known as "Magnescale", an optical interferometer using a light interference pattern, and the like. The displacement measuring unit 14c may be a rotary encoder, a resolver or the like.

The control section 15 determines a frequency at which the efficiency of power transmission is maximized, based on the output (the values of displacement in the position and orientation of the movable component P2 relative to the fixed component PI) of measurements taken by the displacement measuring section 14 and then, controls the power-supplying circuit 13 so that power having the frequency thus determined can be transferred from the power-transmitting coil L1 to the power-receiving coil L2. Specifically, the control section 15 includes an oscillatory frequency selection unit (frequency selection unit) 15a, an oscillatory circuit 15b, a drive clock generator circuit (drive control circuit) 15c, and a driver control circuit (drive control circuit) 15d.

The oscillatory frequency selection unit 15a identifies the position of the movable component P2 relative to the fixed component P1 based on a combination of the values of displacement (Xm, Ym, θm) as measured by the displacement measuring units 14a to 14c in the displacement measuring section 14 and then, provides an oscillatory frequency command value Fc indicative of a frequency at which the efficiency of power transfer is maximized. More specifically, the oscillatory frequency selection unit 15a uses an oscillatory frequency table T in order to determine the oscillatory frequency command value Fc. The oscillatory frequency selection unit 15a can be realized, for example, by a cooperative combination of a microprocessor including a CPU (central processing unit), memories and the like, and a program which realizes the function of the oscillatory frequency selection unit 15a.

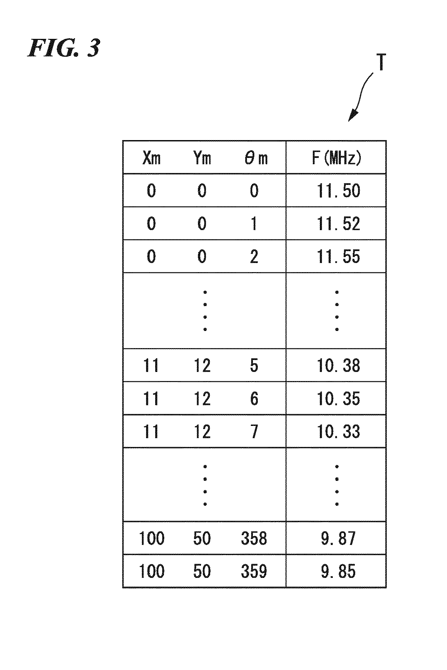

Fig. 3 shows one example of an oscillatory frequency table used in the embodiment of the present invention. As shown in Fig. 3, the oscillatory frequency table T shows the relationship between the values of displacement (Xm, Ym, θm) in the position and orientation of the movable component P2 relative to the fixed component P1 and the values of frequency (F) at which the efficiency of power transfer can be maximized. The oscillatory frequency table T is prepared based on the results of experiments or of simulation.

In the oscillatory frequency table T shown in Fig. 3, the amount of a change in the position and orientation of the movable component P2 relative to the fixed component P1 in the X direction is in the range from zero to 100 mm. The amount of a change in the position and orientation of the movable component P2 relative to the fixed component P1 in the Y direction is in the range from zero to 50 mm. The amount of angular displacement of the movable component P2 about the Z axis is in the range from zero to 359°. As shown in Fig. 3, the oscillatory frequency table T shows that the value of the frequency (F) at which the efficiency of power transfer can be maximized varies with each combination of the values of displacement (Xm, Ym, θm). For example, when a combination of the values of displacement (Xm, Ym, θm) is (11 mm, 12 mm, 6°), the frequency at which the efficiency of power transfer can be maximized is determined to be 10.35 MHz.

The oscillatory frequency table T shown in Fig. 3 is defined in such a way that the values of displacement Xm, Ym change by 1 mm each, and the value of displacement θm changes by 1 degree. A possible number of combinations of these displacement values (Xm, Ym, θm) is so enormous that preparation of the oscillatory frequency table T will be cumbersome. To reduce this cumbersomeness, there may be used an oscillatory frequency table wherein the difference between adjacent values of displacement (Xm, Ym, θm) is made larger so that the relationship between the values of displacement and the values of the frequency (F) at which the efficiency of power transfer can be maximized is discretely defined. For example, the values of displacement Xm, Ym may change by 10 mm each, and the value of displacement θm may change by 10 degrees each.

When the oscillatory frequency table T shown in Fig. 3 is used, the oscillatory frequency selection unit 15a refers to the oscillatory frequency table T and then, obtains a frequency (F) corresponding to a combination of the values of displacement (Xm, Ym, θm) as output from the respective displacement measuring units 14a to 14c, to determine the corresponding oscillatory frequency command value Fc. That is, the oscillatory frequency selection unit 15a provides the oscillatory frequency command value Fc only by referring to the oscillatory frequency table T.

By contrast, when the discrete frequency table as described above is used, the oscillatory frequency selection unit 15a refers to the table and then, obtains a plurality of frequencies (F) corresponding to combinations close to a combination of the values of displacement (Xm, Ym, θm) as output from the respective displacement measuring units 14a to 14c. Linear interpolation or spline interpolation is thereafter carried out to interpolate the values of the frequency (F) so as to obtain the oscillatory frequency command value Fc.

When the discrete frequency table (the values of displacement Xm, Ym may change by 10 mm each, and the value of displacement θm may change by 10 degrees each) is used, the displacement measuring units 14a to 14c output, for example, (35 mm, 15 mm, 53°) as the values of displacement (Xm, Ym, θm) Then, the oscillatory frequency selection unit 15a obtains the following eight frequency values from the table and performs linear interpolation so as to determine the oscillatory frequency command value Fc.

Frequency (F) corresponding to (30 mm, 10 mm, 50°)
Frequency (F) corresponding to (30 mm, 10 mm, 60°)
Frequency (F) corresponding to (30 mm, 20 mm, 50°)
Frequency (F) corresponding to (30 mm, 20 mm, 60°)
Frequency (F) corresponding to (40 mm, 10 mm, 50°)
Frequency (F) corresponding to (40 mm, 10 mm, 60°)
Frequency (F) corresponding to (40 mm, 20 mm, 50°)
Frequency (F) corresponding to (40 mm, 20 mm, 60°)

To prepare the oscillatory frequency table T through simulation, the position as designed of the power-transmitting coil L1 disposed in the fixed component P1 and the position as designed of the power-receiving coil L2 disposed in the movable component P2, undergo coordinate transformation for each combination of displacement (Xm, Ym, θm) so as to obtain the position of the power-receiving coil L2 relative to the power-transmitting coil L1. In each of the relative positions thus obtained, electromagnetic coupling between the power-transmitting coil L1 and the power-receiving coil L2 is evaluated through magnetic field simulation and circuit simulation. While the frequency is changed, this simulation is repeatedly performed to select the optimum frequency (F) for each combination of displacement (Xm, Ym, θm).

To prepare the oscillatory frequency table T through experiments, the amount of power transferred from the fixed component P1 and the amount of power received by the movable component P2 are measured for each combination of displacement (Xm, Ym, θm). The measured amount of the received power is divided by the measured amount of the transferred power to obtain the efficiency of power transfer. While the frequency is changed, the efficiency of power transfer is calculated to thereby select the optimum frequency (F) for each combination of displacement (Xm, Ym, θm).

The oscillatory circuit 15b outputs a signal having a frequency as determined by the oscillatory frequency command value Fc which is output from the oscillatory frequency selection unit 15a. Based on the signal from the oscillatory circuit 15b, the drive clock generator circuit 15c generates a drive clock as a basis for controllably driving the power-supplying circuit 13. The driver control circuit 15d controllably drives the power-supplying circuit 13 in synchronization with the drive clock generated by the drive clock generator circuit 15c. More specifically, the driver control circuit 15d drives transistor bases (or gates when Power MOSFET or IGBT is used) incorporated in the respective switching legs 13a, 13b of the power-supplying circuit 13.

The power receiving circuit 21 receives power (AC power) as supplied wirelessly through the electromagnetic coupling circuit formed by the power-transmitting coil L1 and the power-receiving coil L2, converts the received power to DC power, and supplies the DC power to the load 22. More specifically, the power receiving circuit 21 includes a bridge rectifier circuit formed by four diodes, and a capacitor connected in parallel with the output end of the bridge rectifier circuit. A capacitor C2 is connected in parallel between the power-transmitting coil L2 and the power receiving circuit 21.

Construction and operation of the power-supplying circuit 13, the power-transmitting coil L1, the power-receiving coil L2 and the power receiving circuit 21 are described in detail in Japanese Unexamined Patent Application, First Publication No. 2009-225551 and Japanese Unexamined Patent Application, First Publication No. 2008-236916.

Operation of the wireless power transfer device thus constructed will now be described. For ease of explanation, in an initial state, the movable component P2 is placed at rest in a predetermined reference position (for example, at point of origin). At this time, the values of displacement (Xm, Ym, θm) output from the displacement measuring section 14 are set at (0 mm, 0 mm, 0°). Also, the oscillatory frequency selection unit 15a provides an oscillatory frequency command value Fc at which the efficiency of power transfer is maximized when the movable component P2 is placed in the reference position.

In the initial state, power (for example, three phase AC power) supplied from the external power source 11 is rectified and converted to DC power by the rectifier circuit 12. The DC power is thereafter transferred to the power-supplying circuit 13. The transistor bases of the respective switching legs 13a, 13b in the power-supplying circuit 13 are driven at a frequency corresponding to the oscillatory frequency command value Fc which is output from the oscillatory frequency selection unit 15a by the driver control circuit 15d in the control section 15. The DC power supplied to the power-supplying circuit 13 is then converted to AC power having a frequency (for example, 11.5 MHz) corresponding to the oscillatory frequency command value Fc.

The AC power as converted in the power-supplying circuit 13 is supplied to the power-transmitting coil L1 through the capacitor C1, transferred in a wireless manner to the movable component P2 through the electromagnetic coupling circuit formed by the power-transmitting coil L1 and the power-receiving coil L2, and received by the power receiving circuit 21. The AC power is then converted to DC power. The DC power is thereafter supplied to the load 22. Upon supply of the DC power, the load 22 in the form, for example of a motor is actuated to move the movable component P2. This results in a change in the relative position of the movable component P2 relative to the fixed component P1.

This change in the relative position of the movable component P2 relative to the fixed component P1 is measured by the displacement measuring section 14. The measured values of displacement (Xm, Ym, θm) are output from the respective displacement measuring units 14a to 14c of the displacement measuring section 14 to the oscillatory frequency selection unit 15a of the control section 15 (First step). Upon receipt of the values of displacement (Xm, Ym, θm), the oscillatory frequency selection unit 15a refers to the oscillatory frequency table T so as to determine a frequency (F) at which the efficiency of power transfer can be maximized in a position as indicated by the values of displacement (Xm, Ym, θm) and provides the oscillatory frequency command value Fc indicative of the frequency (F) (Second step).

If the values of displacement (Xm, Ym, θm) as output from the displacement measuring section 14 are, for example, (11 mm, 12 mm, 5°), a frequency of 10.38 MHz is selected by reference to the oscillatory frequency table T, and the corresponding oscillatory frequency command value Fc is output. It is to be noted that when the discrete frequency table as described above is used, a plurality of frequencies (F) corresponding to combinations close to a combination of the values of displacement (Xm, Ym, θm) measured by the displacement measuring section 14 are obtained. The frequencies (F) thus obtained are then interpolated by using linear interpolation or spline interpolation so as to provide the oscillatory frequency command value Fc.

The oscillatory frequency command value Fc as output from the oscillatory frequency selection unit 15a is input to the oscillatory circuit 15b. The oscillatory circuit 15b in turn provides a signal having a frequency as defined by the oscillatory frequency command value Fc. This signal is input to the drive clock generator circuit 15c which in turn, generates a drive clock as a basis for controllably driving the power-supplying circuit 13. The drive clock is then output to the driver control circuit 15d. The driver control circuit 15d controllably drives the power-supplying circuit 13 in synchronization with the drive clock from the drive clock generator circuit 15c (Third step).

In the power-supplying circuit 13, DC power from the rectifier circuit 12 is converted to AC power having the frequency (for example, 10.38 MHz) corresponding to the oscillatory frequency command value Fc. The AC power is then wirelessly transferred to the movable component P2 through the electromagnetic coupling circuit formed by the power-transmitting coil L1 and the power-receiving coil L2. The foregoing operation is thereafter repeatedly carried out to control the frequency of power transferred from the power-transmitting coil L1 to the power-receiving coil L2 so that the efficiency of the power is maximized in each of the positions of the movable component P2 relative to the fixed component P1 occurs.

As described above, in this embodiment, the amount of a change in the position of the movable component P2 relative to the fixed component P1 is measured. Based on the results of this measurement, the control section 15 determines the frequency at which the efficiency of power transfer between the power-transmitting coil L1 and the power-receiving coil L2 can be maximized. The power-supplying circuit 13 is controlled so as to transfer power having the determined frequency between the power-transmitting coil L1 and the power-receiving coil L2. Accordingly, power can be efficiently transferred in a wireless manner to the movable component P2 if the position or orientation of the power-receiving coil L2 relative to the power-transmitting coil L1 changes.

While one embodiment of the wireless power transfer device and method has been described, the present invention is not limited thereto, but may be freely modified within the scope of the present invention. That is, the shape of each of the constructional members and their combination shown in the foregoing embodiment are considered to be illustrative. Additions, omissions, substitutions and other modifications may be made without departing from the spirit of the present invention. The present invention is not limited to the foregoing description, and is defined only by the scope of the appended claims.

Specifically, in the above embodiment, reference is made to the case where power is wirelessly transferred from the fixed component P1 to the movable component P2. The present invention is applicable to the case where power is wirelessly transferred from the movable component P2 to the fixed component P1 as well as the case where power is wirelessly transferred between the fixed component P1 and the movable component P2. Moreover, the present invention is not limited to the case where power is wirelessly transferred between the fixed component P1 and the movable component P2, but is equally applicable to the case where power is wirelessly transferred between movable components. In such a case, power may be transferred not only in a unidirectional manner, but also in a bidirectional manner as well.

In the above embodiment, reference is made to the case where the movable component P2 has three degrees of freedom with translational movement in the X-Y plane (two degrees of freedom) and rotational movement about the Z axis (one degree of freedom). The present invention is applicable to the case where the movable component P2 has more degrees of freedom or lesser degrees of freedom. For example, the present invention is applicable to the case where the movable component P2 is movable in the Z direction or rotatable about the X or Y axis in addition to the translational movement in the X-Y plane, or where the movable component P2 is only movable in the X direction, or is only rotatable about the Z axis.

In the above embodiment, the power-transmitting coil L1 and the power-receiving coil L2 are illustratively rectangular in shape as viewed in plan. However, the plan view of the power-transmitting coil L1 and the power-receiving coil L2 may have any shape (for example, a square, circular or ellipsoidal shape) so far as such shape is suitable for wireless power transfer.

Also, in the above embodiment, the frequency of power transferred from the fixed component P1 to the movable component P2 varies depending on the oscillatory frequency command value Fc as output to the oscillatory circuit 15b. Alternatively, it may vary depending on impedance. For example, a capacitor (varicap) whose capacitance varies depending on voltage may be connected in parallel with the capacitor C1, and the voltage as applied to the capacitor is controlled to change impedance and thus, the frequency of power to be transferred.

In the above embodiment, the stage device is illustratively employed as a device equipped with the fixed component P1 and the movable component P2. However, the present invention may be equally applicable to any industrial equipment with a movable component such as an arm, a crane and a robot. Additionally, it may be applicable to consumer and other equipment.

### Industrial applicability

According to the present invention, wireless power transfer can be efficiently carried out if a change in at least one of the relative position and orientation between the first and second coils occurs.

### Description of Reference Signs

- 1: Wireless power transfer device
- 13: Power-supplying circuit
- 14: Displacement measuring section
- 15: Control section
- 15a: Oscillatory frequency selection unit
- 15b: Oscillatory circuit
- 15c: Drive clock generator circuit
- 15d: Driver control circuit
- L1: Power-transmitting coil
- L2: Power-receiving coil
- P1: Fixed component
- P2: Movable component
- T: Oscillatory frequency table

## Claims

1. A wireless power transfer device capable of wirelessly transferring power between a first coil and a second coil, at least one of relative position and orientation between the first and second coils being changeable, the wireless power transfer device comprising:
a power transfer section that supplies power to be transferred between the first and second coils;
a measuring section that measures the amount of any changes in relative position and orientation between the first coil and the second coil; and
a control section that based on the result of measurements taken by the measuring section, determines a frequency at which the efficiency of power transfer between the first coil and the second coil is maximized, and controls the power transfer section so that power having the frequency is transferred between the first coil and the second coil.

2. A wireless power transfer device according to claim 1, wherein the control section comprises a table used to determine the frequency, the table showing the relationship between the amount of any changes in the relative position and orientation between the first coil and the second coil and the frequency at which the efficiency of power transfer between the first coil and the second coil is maximized.

3. A wireless power transfer device according to claim 2, wherein the table discretely defines relationship between the frequency at which the efficiency of power transfer between the first coil and the second coil is maximized and the amount of any changes in the relative position and orientation between the first coil and the second coil, and
the control section interpolates the entries of the table to obtain the frequency.

4. A wireless power transfer device according to claim 1, wherein the control section comprises:
a frequency selection unit operable to obtain the frequency at which the efficiency of power transfer between the first coil and the second coil is maximized, based on the result of measurements taken by the measuring section;
an oscillatory circuit operable to output a signal having the frequency selected by the frequency selection unit; and
a drive control circuit operable to controllably drive the power transfer section in response to the signal output from the oscillatory circuit.

5. A wireless power transfer device according to claim 2, wherein the control section comprises:
a frequency selection unit operable to obtain the frequency at which the efficiency of power transfer between the first coil and the second coil is maximized, based on the result of measurements taken by the measuring section;
an oscillatory circuit operable to output a signal having the frequency selected by the frequency selection unit; and
a drive control circuit operable to controllably drive the power transfer section in response to the signal output from the oscillatory circuit.

6. A wireless power transfer device according to claim 3, wherein the control section comprises:
a frequency selection unit operable to obtain the frequency at which the efficiency of power transfer between the first coil and the second coil is maximized, based on the result of measurements taken by the measuring section;
an oscillatory circuit operable to output a signal having the frequency selected by the frequency selection unit; and
a drive control circuit operable to controllably drive the power transfer section in response to the signal output from the oscillatory circuit.

7. A wireless power transfer device according to claim 4, wherein the power transfer section comprises a power conversion circuit that under the control of the drive control circuit, converts DC power to AC power having the frequency at which the efficiency of power transfer between the first coil and the second coil is maximized.

8. A wireless power transfer device according to claim 5, wherein the power transfer section comprises a power conversion circuit that under the control of the drive control circuit, converts DC power to AC power having the frequency at which the efficiency of power transfer between the first coil and the second coil is maximized.

9. A wireless power transfer device according to claim 6, wherein the power transfer section comprises a power conversion circuit that under the control of the drive control circuit, converts DC power to AC power having the frequency at which the efficiency of power transfer between the first coil and the second coil is maximized.

10. A wireless power transfer device according to any one of claims 1 to 9, wherein one of the first and second coils is disposed in a fixed component, the fixed component being fixed in position and orientation, and
the other coil is disposed in a movable component, at least one of position and orientation of the movable component is changeable.

11. A method for wirelessly transferring power between a first coil and a second coil, at least one of relative position and orientation between the first coil and the second coil being changeable, the method comprising:
a first step of measuring the amount of changes in the relative position and orientation between the first coil and the second coil;
a second step of determining a frequency at which the efficiency of power transfer between the first coil and the second coil is maximized, based on the result of measurements taken in the first step; and
a third step of controlling a power transfer section so that power having the frequency determined in the second step is transferred between the first coil and the second coil, the power transfer section being operable to supply power to be transferred between the first coil and the second coil.
